(19) Europäisches Patentamt
European Patent Office
Office européen des brevets

(11) **EP 3 408 635 B1**

(12) **EUROPÄISCHE PATENTSCHRIFT**

(45) Veröffentlichungstag und Bekanntmachung des Hinweises auf die Patenterteilung:
**05.02.2020   Patentblatt 2020/06**

(21) Anmeldenummer: **16805807.1**

(22) Anmeldetag: **02.12.2016**

(51) Int Cl.:
**G01M 3/26** *(2006.01)*    **F15B 19/00** *(2006.01)*
**F15B 20/00** *(2006.01)*    **F15B 11/10** *(2006.01)*

(86) Internationale Anmeldenummer:
**PCT/EP2016/079582**

(87) Internationale Veröffentlichungsnummer:
**WO 2017/129293 (03.08.2017 Gazette 2017/31)**

(54) **EINFACHE LECKAGEBESTIMMUNG BEI EINER HYDRAULIKZYLINDEREINHEIT**

SIMPLE LEAKAGE DETECTION IN A HYDRAULIC CYLINDER UNIT

DETECTION SIMPLE DE FUITE DANS UNE UNITE DE VERIN HYDRAULIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.01.2016   EP 16152531**

(43) Veröffentlichungstag der Anmeldung:
**05.12.2018   Patentblatt 2018/49**

(73) Patentinhaber: **Primetals Technologies Germany GmbH
91052 Erlangen (DE)**

(72) Erfinder:
• **GAFUR, Ilhom
90419 Nürnberg (DE)**
• **LORENZ, Andreas
91054 Erlangen (DE)**

(74) Vertreter: **Metals@Linz
Primetals Technologies Austria GmbH
Intellectual Property Upstream IP UP
Turmstraße 44
4031 Linz (AT)**

(56) Entgegenhaltungen:
**DE-A1- 19 927 117**

**Beschreibung**

Die vorliegende Erfindung geht aus von einem Ermittlungsverfahren für einen Leckagebeiwert einer Hydraulikzylindereinheit, die einen Hydraulikzylinder, einen in dem Hydraulikzylinder verfahrbaren Kolben und ein Servoventil aufweist, wobei der Kolben ein erstes und ein zweites Arbeitsvolumen der Hydraulikzylindereinheit voneinander trennt, wobei das Servoventil mit einer Hydraulikpumpe, einem Tank sowie dem ersten und dem zweiten Arbeitsvolumen verbunden ist,

- wobei das Servoventil über die Hydraulikpumpe mit einem Pumpendruck beaufschlagt wird und der Tank einen Tankdruck aufweist,
- wobei das Servoventil auf eine definierte Ventilstellung eingestellt wird,
- wobei eine Kolbenstellung des Kolbens im Hydraulikzylinder sowie ein erster und ein zweiter Arbeitsdruck, mit dem das erste und das zweite Arbeitsvolumen beaufschlagt sind, erfasst werden.

Die vorliegende Erfindung geht weiterhin aus von einem Computerprogramm für eine Auswertungseinrichtung, wobei das Computerprogramm Maschinencode umfasst, der von der Auswertungseinrichtung unmittelbar abarbeitbar ist, wobei die Abarbeitung des Maschinencodes durch die Auswertungseinrichtung bewirkt, dass die Auswertungseinrichtung den Leckagebeiwert ermittelt.

Die vorliegende Erfindung geht weiterhin aus von einer Auswertungseinrichtung.

Die vorliegende Erfindung geht weiterhin aus von einer Hydraulikzylindereinheit, die einen in einem Hydraulikzylinder verfahrbaren Kolben und ein Servoventil aufweist, wobei der Kolben ein erstes und ein zweites Arbeitsvolumen der Hydraulikzylindereinheit voneinander trennt, wobei das Servoventil eingangsseitig mit einer Hydraulikpumpe und mit einem Tank und ausgangsseitig mit dem ersten und dem zweiten Arbeitsvolumen verbunden ist,

- wobei das Servoventil über die Hydraulikpumpe mit einem Pumpendruck beaufschlagt wird und der Tank einen Tankdruck aufweist,
- wobei das Servoventil von einer Steuereinrichtung auf eine definierte Ventilstellung einstellbar ist,
- wobei von entsprechenden Sensoren eine Kolbenstellung des Kolbens im Hydraulikzylinder sowie ein erster und ein zweiter Arbeitsdruck, mit dem das erste und das zweite Arbeitsvolumen beaufschlagt sind, erfassbar sind.

Aus der DE 10 2007 051 857 B3 ist eine Hydraulikzylindereinheit bekannt, die einen in einem Hydraulikzylinder verfahrbaren Kolben und ein Hydraulikventil aufweist, wobei der Kolben ein erstes und ein zweites Arbeitsvolumen der Hydraulikzylindereinheit voneinander trennt, wobei das Hydraulikventil eingangsseitig mit einer Hydraulikpumpe und mit einem Tank und ausgangsseitig mit dem ersten und dem zweiten Arbeitsvolumen verbunden ist. Das Hydraulikventil wird über die Hydraulikpumpe mit einem Pumpendruck beaufschlagt. Der Tank weist einen Tankdruck auf. Das Hydraulikventil wird auf eine definierte Ventileinstellung eingestellt. Ein erster und ein zweiter Arbeitsdruck, mit dem das erste und das zweite Arbeitsvolumen beaufschlagt sind, sowie eine Kolbenstellung des Kolbens im Hydraulikzylinder werden erfasst.

Bei der DE 10 2007 051 857 B3 wird anhand erfasster, zeitlich variabler Größen wie beispielsweise dem ersten und dem zweiten Arbeitsdruck und der Kolbenstellung in Verbindung mit weiteren, zeitlichen invarianten Größen wie beispielsweise den wirksamen Arbeitsflächen des Kolbens ein Linearisierungsfaktor ermittelt, der einen gleichmäßigen Betrieb der Hydraulikzylindereinheit über den gesamten Stellweg des Kolbens gewährleistet.

Bei der DE 10 2007 051 857 B3 ist das Hydraulikventil als Zweiwegeventil oder als Vierwegeventil ausgebildet. Weitere Aussagen über die Ausgestaltung des Hydraulikventils finden sich nicht.

Bei einer Hydraulikzylindereinheit ist es erforderlich, die beiden Arbeitsvolumina gegeneinander abzudichten. In der Regel ist zu diesem Zweck in den Kolben eine entsprechende Dichtung eingebracht, insbesondere eine Ringdichtung. Dennoch tritt in der Praxis ein geringer Fluss an Hydraulikflüssigkeit vom Arbeitsvolumen mit dem jeweils höheren Arbeitsdruck zum Arbeitsvolumen mit dem jeweils niedrigeren Arbeitsdruck auf. Dieser Fluss bzw. Leckstrom ist proportional zur Differenz der beiden Arbeitsdrücke. Der zugehörige Proportionalitätsfaktor ist der sogenannte Leckagebeiwert.

Die in den Kolben eingebrachte Dichtung unterliegt Verschleißerscheinungen. Die Verschleißerscheinungen verringern zunächst nur die Dynamik der Hydraulikzylindereinheit. Es kann jedoch bei fortschreitendem Verschleiß auch zu einem Bruch der Dichtung und damit zu einem abrupten Versagen der Hydraulikzylindereinheit kommen.

Um einem derartigen Versagen der Hydraulikzylindereinheit vorzubeugen, ist im Stand der Technik bekannt, die Hydraulikzylindereinheit von Zeit zu Zeit zu demontieren und die Dichtung zu erneuern bzw. zumindest zu kontrollieren. Diese Vorgehensweise ist zum einen mit einer Betriebsunterbrechung der Hydraulikzylindereinheit verbunden und zum anderen äußerst aufwändig.

Im Stand der Technik ist weiterhin bekannt, die Hydraulikzylindereinheit mit speziellen zusätzlichen Messeinrichtungen zu versehen, insbesondere mit Durchflussmessern in den Hydraulikzuleitungen zu den Arbeitsvolumina der Hydraulikzylindereinheit. Ein Nachrüsten ist umständlich und teuer. Auch bei Neuanschaffungen stellen die zusätzlichen Messeinrichtungen einen erheblichen Kostenfaktor dar. Diese theoretisch mögliche Lösung wird daher in der Praxis meist nicht ergriffen.

Aus der DE 199 27 117 A1 ist eine Messeinrichtung zur Bestimmung von Leckagen bei hydraulischen Bauelementen bekannt. Die Messeinrichtung weist einen hydraulischen Druckzylinder auf, dessen Druckraum mit einem Hydraulikraum des zu prüfenden Bauelements verbunden werden kann und dessen Druckzylinder mit einem Kolben beaufschlagbar ist. Die DE 199 27 117 A1 zeigt somit ein Ermittlungsverfahren für einen Leckagebeiwert einer Hydraulikzylindereinheit, die einen Hydraulikzylinder und einen in dem Hydraulikzylinder verfahrbaren Kolben aufweist, wobei der Kolben ein erstes und ein zweites Arbeitsvolumen der Hydraulikzylindereinheit voneinander trennt.

Die Aufgabe der vorliegenden Erfindung besteht darin, Möglichkeiten zu schaffen, mittels derer im laufenden Betrieb der Hydraulikzylindereinheit eine Überwachung der internen Leckage der Hydraulikzylindereinheit möglich wird, ohne zur Ermittlung der Leckage bzw. des Leckagebeiwerts - also der eigentlich signifikanten Größe - derartige spezielle Messeinrichtungen zu benötigen.

Die Aufgabe wird durch ein Ermittlungsverfahren mit den Merkmalen des Anspruchs 1 gelöst. Konkrete Ausgestaltungen des Ermittlungsverfahrens sind Gegenstand der abhängigen Ansprüche 2 und 3.

Erfindungsgemäß wird ein Ermittlungsverfahren der eingangs genannten Art dadurch ausgestaltet,

- dass eine Auswertungseinrichtung die Kolbenstellung, den ersten und den zweiten Arbeitsdruck und die Ventilstellung entgegennimmt und
- dass die Auswertungseinrichtung den Leckagebeiwert anhand der Kolbenstellung, des ersten und des zweiten Arbeitsdrucks, der Ventilstellung, des Pumpendrucks und eines Tankdrucks in Verbindung mit zeitlich unveränderlichen Parametern der Hydraulikzylindereinheit ermittelt.

Durch diese Vorgehensweise kann der Leckagebeiwert auf einfache und kostengünstige Weise zuverlässig ermittelt werden. Insbesondere werden in der Regel die Kolbenstellung und der erste und der zweite Arbeitsdruck für den normalen Betrieb der Hydraulikzylindereinheit sowieso benötigt. Die Ventilstellung ist oftmals ebenfalls bekannt. Falls für die Erfassung der Ventilstellung ein zusätzlicher Sensor erforderlich ist, ist dieser kostengünstig und einfach realisierbar. Der für den Tankdruck verwendete Wert kann der Tankdruck als solcher sein. Alternativ kann der Tankdruck zu Null gesetzt werden. Dies ist zulässig, weil der Tankdruck gegenüber den anderen verwendeten Drücken, d.h. den beiden Arbeitsdrücken und dem Pumpendruck, vernachlässigbar klein ist.

Die Ermittlung des Leckagebeiwerts ist besonders zuverlässig dadurch möglich, dass die Auswertungseinrichtung den Leckagebeiwert rekursiv anhand einer Sequenz ermittelt, wobei die Sequenz Gruppen von zeitlich zusammengehörigen Werten der Kolbenstellung, der Ventilstellung, des ersten und des zweiten Arbeitsdrucks, des Pumpendrucks, und des Tankdrucks umfasst. Der Begriff "zeitlich zusammengehörig" bedeutet, dass die jeweiligen Werte für den selben Zeitpunkt des Betriebs der Hydraulikzylindereinheit gültig sind. Rekursive Ermittlung bedeutet, dass zunächst ein Gleichungssystem mit im wesentlichen sinnvollen Werten für den Leckagebeiwert und interne Werte des Gleichungssystems initialisiert wird, sodann durch Einsetzen der Werte der ersten Gruppe neue Werte für den Leckagebeiwert und die internen Werte des Gleichungssystems ermittelt werden und diese Vorgehensweise sodann, jeweils ausgehend von den zuvor ermittelten Werten, mit den Werten der jeweils nächsten Gruppe fortgesetzt wird.

Vorzugsweise ermittelt die Auswertungseinrichtung während des Betriebs der Hydraulikzylindereinheit kontinuierlich eine Differenz zwischen einem nominalen Leckagebeiwert und dem ermittelten Leckagebeiwert. In diesem Fall ist es insbesondere möglich, dass die Auswertungseinrichtung einen Alarm auslöst, sobald der Absolutwert der Differenz einen Schrankenwert überschreitet.

Die Aufgabe wird weiterhin durch ein Computerprogramm mit den Merkmalen des Anspruchs 4 gelöst. Konkrete Ausgestaltungen des Computerprogramms sind Gegenstand der abhängigen Ansprüche 5 und 6.

Erfindungsgemäß wird ein Computerprogramm der eingangs genannten Art dadurch ausgestaltet, dass die Abarbeitung des Maschinencodes durch die Auswertungseinrichtung bewirkt, dass die Auswertungseinrichtung

- eine Kolbenstellung eines in einem Hydraulikzylinder einer Hydraulikzylindereinheit verfahrbaren, ein mit einem Servoventil der Hydraulikzylindereinheit verbundenes erstes und ein mit dem Servoventil verbundenes zweites Arbeitsvolumen der Hydraulikzylindereinheit voneinander trennenden Kolbens der Hydraulikzylindereinheit, einen ersten und einen zweiten Arbeitsdruck, mit dem das erste und das zweite Arbeitsvolumen beaufschlagt sind, und eine Ventilstellung des Servoventils entgegennimmt und
- anhand der Kolbenstellung, des ersten und des zweiten Arbeitsdrucks, der Ventilstellung, eines Pumpendrucks einer mit dem Servoventil verbundenen Hydraulikpumpe und eines Tankdrucks eines mit dem Servoventil verbundenen Tanks in Verbindung mit zeitlich unveränderlichen Parametern der Hydraulikzylindereinheit einen Leckagebeiwert der Hydraulikzylindereinheit ermittelt.

Analog zum Ermittlungsverfahren besteht eine konkrete Ausgestaltung des Computerprogramms darin, dass die Abarbeitung des Maschinencodes durch die Auswertungseinrichtung bewirkt, dass die Auswertungseinrichtung den Leckagebeiwert rekursiv anhand einer Sequenz ermittelt, wobei die Sequenz Gruppen von zeitlich zusammengehörigen Werten der Kolbenstellung, des ersten und des zweiten Arbeitsdrucks, der Ventilstellung, des Pumpendrucks und des Tankdrucks umfasst.

Ebenso analog zum Ermittlungsverfahren besteht eine weitere konkrete Ausgestaltung des Computerprogramms darin, dass die Abarbeitung des Maschinencodes durch die Auswertungseinrichtung bewirkt, dass die Auswertungseinrichtung während des Betriebs der Hydraulikzylindereinheit kontinuierlich eine Differenz zwischen einem nominalen Leckagebeiwert und dem ermittelten Leckagebeiwert ermittelt und einen Alarm auslöst, sobald der Absolutwert der Differenz einen Schrankenwert überschreitet.

Die Aufgabe wird weiterhin durch eine Auswertungseinrichtung mit den Merkmalen des Anspruchs 7 gelöst. Erfindungsgemäß ist eine Auswertungseinrichtung der eingangs genannten Art mit einem erfindungsgemäßen Computerprogramm programmiert.

Die Aufgabe wird weiterhin durch eine Hydraulikzylindereinheit mit den Merkmalen des Anspruchs 8 gelöst. Konkrete Ausgestaltungen der Hydraulikzylindereinheit sind Gegenstand der abhängigen Ansprüche 9 und 10.

Erfindungsgemäß wird eine Hydraulikzylindereinheit der eingangs genannten Art dadurch ausgestaltet,

- dass eine Auswertungseinrichtung dazu ausgebildet ist, von den Sensoren die Kolbenstellung und den ersten und den zweiten Arbeitsdruck sowie von der Steuereinrichtung oder von einem weiteren Sensor die Ventilstellung entgegenzunehmen, und
- dass die Auswertungseinrichtung dazu ausgebildet ist, anhand der Kolbenstellung, des ersten und des zweiten Arbeitsdrucks, der Ventilstellung, des Pumpendrucks und eines Tankdrucks in Verbindung mit im Betrieb der Hydraulikzylindereinheit zeitlich unveränderlichen Parametern der Hydraulikzylindereinheit einen Leckagebeiwert der Hydraulikzylindereinheit zu ermitteln.

Analog zum Ermittlungsverfahren besteht eine konkrete Ausgestaltung der Hydraulikzylindereinheit darin, dass die Auswertungseinrichtung derart ausgebildet ist, dass sie den Leckagebeiwert rekursiv anhand einer Sequenz ermittelt, wobei die Sequenz Gruppen von zeitlich zusammengehörigen Werten der Kolbenstellung, der Ventilstellung, des ersten und des zweiten Arbeitsdrucks, des Pumpendrucks und vorzugsweise des Tankdrucks umfasst.

Ebenso analog zum Ermittlungsverfahren besteht eine weitere konkrete Ausgestaltung der Hydraulikzylindereinheit darin, dass die Auswertungseinrichtung derart ausgebildet ist, dass sie während des Betriebs der Hydraulikzylindereinheit kontinuierlich eine Differenz zwischen einem nominalen Leckagebeiwert und dem ermittelten Leckagebeiwert ermittelt und einen Alarm auslöst, sobald der Absolutwert der Differenz einen Schrankenwert überschreitet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

FIG 1    ein Blockschaltbild einer Hydraulikzylindereinheit einschließlich zugehöriger Komponenten und

FIG 2    ein Ablaufdiagramm.

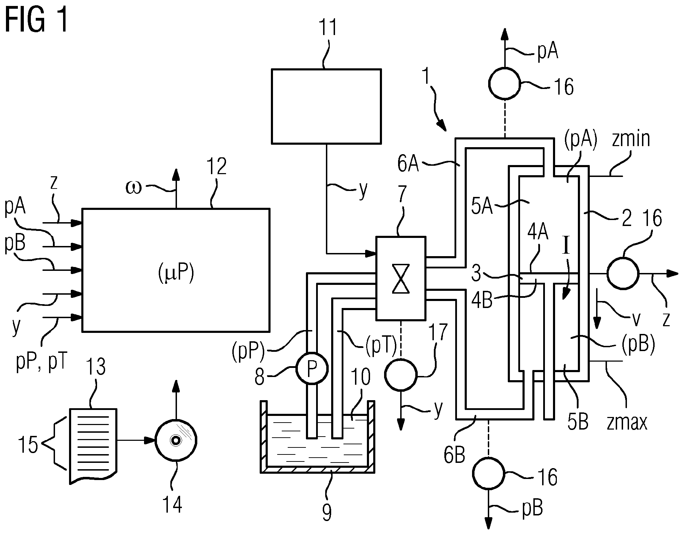

Gemäß FIG 1 weist eine Hydraulikzylindereinheit 1 einen Hydraulikzylinder 2 auf, in dem ein Kolben 3 beweglich gelagert ist. Der Kolben 3 ist innerhalb des Hydraulikzylinders 1 zwischen einer Minimalstellung zmin und einer Maximalstellung zmax bewegbar. Er befindet sich also zu jedem Zeitpunkt bei einer Iststellung z, die zwischen der Minimalstellung zmin und der Maximalstellung zmax liegt.

Der Kolben 3 weist eine erste Arbeitsfläche 4A und eine zweite Arbeitsfläche 4B auf. Jede Arbeitsfläche 4A, 4B ist einem entsprechenden Arbeitsvolumen 5A, 5B zugewandt. Im Arbeitsvolumen 5A herrscht ein erster Arbeitsdruck pA, im zweiten Arbeitsvolumen 5B ein zweiter Arbeitsdruck pB.

Die Arbeitsvolumina 5A, 5B sind über Hydraulikpfade 6A, 6B und ein Servoventil 7 mit einer Hydraulikpumpe 8 und einem Hydraulikreservoir 9 bzw. Tank 9 hydraulisch verbunden. Die Hydraulikpfade 6A, 6B erstrecken sich von dem jeweiligen Arbeitsvolumen 5A, 5B bis zum Servoventil 7.

Über die Hydraulikpumpe 8 wird die Hydraulikflüssigkeit 10 mit einem Pumpendruck pP beaufschlagt. Im Hydraulikreservoir 9 herrscht ein Tankdruck pT. Im Ergebnis stehen somit am Servoventil 7 über den jeweiligen Anschluss zur Hydraulikpumpe 8, zum Tank 9 und zu den Arbeitsvolumina 5A, 5B der Pumpendruck pP, der Tankdruck pT und die beiden Arbeitsdrücke pA, pB an. Der Pumpendruck pP und die beiden Arbeitsdrücke pA, pB weisen oftmals hohe Werte auf. Der Tankdruck pT hingegen ist gegenüber diesen Werten oftmals vernachlässigbar klein.

Die Funktionalität des Servoventils 7 besteht - im Gegensatz zu einem Proportionalventil oder einem Schaltventil - darin, dass bei gegebenen Drücken pP, pT, pA und pB durch eine Ventilstellung y des Servoventils 7 nicht nur qualitativ, sondern auch quantitativ bestimmt ist, welche Volumenströme über die Hydraulikpumpe 8 zu welchem der Arbeitsvolumina 5A, 5B bzw. von welchem der Arbeitsvolumina 5A, 5B in den Tank 9 fließen. Das Servoventil 7 kann nach Bedarf als Vierwegeventil oder als Zweiwegeventil ausgebildet sein. Mittels eines Vierwegeventils ist jedes der beiden Arbeitsvolumina 5A, 5B alternativ mit dem Pumpendruck pP oder mit dem Tankdruck pT beaufschlagbar. Bei einem Zweiwegeventil wird eines der beiden Arbeitsvolumina 5A, 5B mit einem konstanten Druck beaufschlagt, beispielsweise mit der Hälfte des Pumpendrucks pP. Das andere der Arbeitsvolumina 5A, 5B wird in diesem Fall alternativ mit dem Pumpendruck pP oder dem Tankdruck pT beaufschlagt.

Der Kolben 3 trennt die beiden Arbeitsvolumina 5A, 5B voneinander. Dennoch fließt ein Leckstrom I an Hydraulikflüssigkeit 10 zwischen den beiden Arbeitsvolumina 5A, 5B. Der Leckstrom I ist proportional zur Differenz der Arbeitsdrücke pA, pB. Es gilt also die Beziehung

$$I = \omega \cdot \left( pA - pB \right) \qquad\qquad (1)$$

Der Proportionalitätsfaktor $\omega$ wird üblicherweise als Leckagebeiwert bezeichnet. Die Ermittlung des Leckagebeiwerts $\omega$ ist Gegenstand der vorliegenden Erfindung. Hierauf wird später detailliert eingegangen.

Die Hydraulikzylindereinheit 1 wird von einer Steuereinrichtung 11 gesteuert. Insbesondere wird das Servoventil 7 von der Steuereinrichtung 11 zu jedem Zeitpunkt definiert auf die für den jeweiligen Zeitpunkt vorgegebene jeweilige Ventilstellung y eingestellt.

Weiterhin ist eine Auswertungseinrichtung 12 vorhanden. Die Auswertungseinrichtung 12 ist entsprechend der Darstellung in FIG 1 als softwareprogrammierbare Einrichtung ausgebildet. In FIG 1 ist die Auswertungseinrichtung 12 als von der Steuereinrichtung 11 verschiedene Einrichtung dargestellt. Die Auswertungseinrichtung 12 kann jedoch alternativ mit der Steuereinrichtung 11 eine Einheit bilden.

Die Auswertungseinrichtung 12 ist mittels eines Computerprogramms 13 programmiert. Das Computerprogramm 13 kann der Auswertungseinrichtung 12 beispielsweise mittels eines Datenträgers 14 zugeführt werden, auf dem das Computerprogramm 13 in maschinenlesbarer Form gespeichert ist. Als Datenträger 14 kommt hierbei prinzipiell ein beliebiger Datenträger in Frage. Dargestellt ist (rein beispielhaft) in FIG 1 eine CD-ROM 14.

Das Computerprogramm 13 umfasst Maschinencode 15, der von der Auswertungseinrichtung 12 unmittelbar abarbeitbar ist. Das Abarbeiten des Maschinencodes 15 durch die Auswertungseinrichtung 12 bewirkt, dass die Auswertungseinrichtung 12 ein Ermittlungsverfahren für den Leckagebeiwert $\omega$ ausführt, das nachfolgend näher erläutert wird.

Im Rahmen der vorliegenden Erfindung werden mittels entsprechender Sensoren 16 die Kolbenstellung z des Kolbens 3 im Hydraulikzylinder 2 sowie der erste und der zweite Arbeitsdruck pA, pB erfasst. Die erfassten Größen z, pA, pB werden der Auswertungseinrichtung 12 zugeführt. Diese nimmt die erfassten Größen z, pA, pB entgegen. Die Größen z, pA, pB sind zeitvariabel. Sie werden also mit jedem Zeittakt TS neu erfasst. Die zu einem bestimmten Zeitpunkt erfassten Größen z, pA, pB sind Bestandteil einer jeweiligen Gruppe von zeitlich zusammengehörigen Werten.

Bestandteil der jeweiligen Gruppe von zeitlich zusammengehörigen Werten sind auch der Pumpendruck pP und der Tankdruck pT. Es ist möglich, dass auch diese Größen pP, pT mittels Sensoren erfasst werden. In diesem Fall können die Größen pP, pT zeitvariabel sein, da sie mit jedem Zeittakt TS neu erfasst und der Auswertungseinrichtung 12 zugeführt werden. Alternativ können der Pumpendruck pP und der Tankdruck pT jedoch ebenso konstant sein. In diesem Fall müssen der Pumpendruck pP und der Tankdruck pT der Auswertungseinrichtung 12 nur einmal bekannt gemacht werden, beispielsweise im Wege einer Parametrierung der Auswertungseinrichtung 12. Wenn der Tankdruck pT parametriert wird, kann für den Tankdruck pT oftmals der Wert 0 angesetzt und parametriert werden.

Bestandteil der jeweiligen Gruppe von zeitlich zusammengehörigen Werten ist weiterhin die jeweilige Ventilstellung y. Die Ventilstellung y ist eine zeitvariable Größe, die der Auswertungseinrichtung 12 mit jedem Zeittakt TS neu zugeführt werden muss. Es ist möglich, dass die Ventilstellung y der Auswertungseinrichtung 12 von der Steuereinrichtung 11 übermittelt wird. Alternativ ist es möglich, dass die Ventilstellung y mittels eines weiteren Sensors 17 erfasst und von dort aus der Auswertungseinrichtung 12 zugeführt wird. Welche dieser beiden Vorgehensweisen ergriffen wird, liegt im Belieben des Fachmanns.

Die Auswertungseinrichtung 12 ermittelt den Leckagebeiwert $\omega$ anhand der genannten Werte, also anhand der Kolbenstellung z, des ersten und des zweiten Arbeitsdrucks pA, pB, der Ventilstellung y, des Pumpendrucks pP und vorzugsweise des Tankdrucks pT. Sie verwendet zur Ermittlung zusätzlich zu den vorstehend genannten Größen eine Anzahl von weiteren Parametern der Hydraulikzylindereinheit 1. Diese weiteren Parameter sind jedoch zeitlich unveränderlich. Sie müssen der Auswertungseinrichtung 12 daher nur einmal im Rahmen einer Parametrierung bekannt gemacht werden .

In der Regel erfolgt durch die Auswertungseinrichtung 12 eine rekursive Ermittlung des Leckagebeiwerts $\omega$. Die Auswertungseinrichtung 12 ermittelt also, ausgehend von einer zuvor gültigen, mittels eines Gleichungssystems ermittelten Lösung des Gleichungssystems durch Einsetzen der zeitlich zusammengehörigen Werte einer Gruppe von Werten jeweils eine neue Lösung des Gleichungssystems. Ein Teil der jeweiligen Lösung ist der Leckagebeiwert ω. Der verbleibende Teil der Lösung sind interne Werte des Gleichungssystems. Die Gruppen von Werten wurden obenstehend erläutert. Jede Gruppe umfasst - gültig für den jeweiligen Zeitpunkt - die Kolbenstellung z, den ersten und den zweiten Arbeitsdrucks pA, pB, die Ventilstellung y, den Pumpendruck pP und den Tankdruck pT. Das Gleichungssystem ist derart bestimmt, dass die Lösung des Gleichungssystems und insbesondere der Leckagebeiwert ω konvergiert.

Die genaue Vorgehensweise wird nachstehend detailliert erläutert.

Der zeitliche Verlauf der Arbeitsdrücke pA, pB kann mit hinreichender Genauigkeit durch folgende Differenzialgleichungen beschrieben werden:

$$\dot{pA} = \frac{E}{VA(z)} \cdot sign(pP - pA)\left( QNAy\sqrt{\frac{pP - pA}{pN}} - AA\dot{z} + \omega(pA - pB) \right) \qquad (2)$$

$$\dot{pB} = -\frac{E}{VB(z)} \cdot sign(pB - pT)\left( QNBy\sqrt{\frac{pB - pT}{pN}} - AB\dot{z} - \omega(pA - pB) \right) \qquad (3)$$

$$\dot{pA} = \frac{E}{VA(z)} \cdot sign(pA - pT)\left( QNAy\sqrt{\frac{pA - pT}{pN}} - AA\dot{z} + \omega(pA - pB) \right) \qquad (4)$$

$$\dot{pB} = -\frac{E}{VB(z)} \cdot sign(pV - pB)\left( QNBy\sqrt{\frac{pV - pB}{pN}} - AB\dot{z} + \omega(pA - pB) \right) \qquad (5)$$

Wird für den Tankdruck näherungsweise 0 angenommen, vereinfachen sich die Gleichungen zu:

$$\dot{pA} = \frac{E}{VA(z)} \cdot sign(pP - pA)\left( QNAy\sqrt{\frac{pP - pA}{pN}} - AA\dot{z} + \omega(pA - pB) \right) \qquad (2')$$

$$\dot{pB} = -\frac{E}{VB(z)} \cdot sign(pB)\left( QNBy\sqrt{\frac{pB}{pN}} - AB\dot{z} - \omega(pA - pB) \right) \qquad (3')$$

$$\dot{pA} = \frac{E}{VA(z)} \cdot sign(pA)\left( QNAy\sqrt{\frac{pA}{pN}} - AA\dot{z} + \omega(pA - pB) \right) \qquad (4')$$

$$\dot{pB} = -\frac{E}{VB(z)} \cdot sign(pV - pB)\left( QNBy\sqrt{\frac{pV - pB}{pN}} - AB\dot{z} + \omega(pA - pB) \right) \qquad (5')$$

In der nachfolgenden Beschreibung wird von den exakten Gleichungen 2 bis 5 ausgegangen. Wenn alternativ von den Gleichungen 2' bis 5' ausgegangen wird, ergeben sich jedoch analoge Sachverhalte. Die Gleichungen sind jedoch etwas vereinfacht.

Die Gleichungen 2 und 3 gelten, wenn die Ventilstellung y größer als 0 ist, d.h. das erste Arbeitsvolumen 5A über das Servoventil 7 mit der Pumpe 8 verbunden ist und das zweite Arbeitsvolumen 5B über das Servoventil 7 mit dem Tank 9 verbunden ist. Die

Gleichungen 4 und 5 gelten, wenn die Ventilstellung y kleiner als 0 ist, d.h. das erste Arbeitsvolumen 5A über das Servoventil 7 mit dem Tank 9 verbunden ist und das zweite Arbeitsvolumen 5B über das Servoventil 7 mit der Pumpe 8 verbunden ist. Der Fall, dass die Ventilstellung y exakt gleich Null ist, kann (nach Belieben) ausgeklammert werden oder dem Fall, dass die Ventilstellung y größer als 0 ist, oder dem Fall, dass die Ventilstellung y kleiner als 0 ist, zugeordnet werden.

Für die in den Gleichungen 2 bis 5 verwendeten Parameter gilt:

- E ist die Federkonstante der Hydraulikflüssigkeit 10.
- VA ist das Volumen an Hydraulikflüssigkeit 10, das sich im Hydraulikpfad 6A und im ersten Arbeitsvolumen 5A befindet. Das Volumen VA ergibt sich zu

$$VA = V\min A + AA(z - z\min) \qquad (6)$$

wobei VminA diejenige Menge an Hydraulikflüssigkeit 10 ist, die sich zwischen dem Servoventil 7 und der Arbeitsfläche 4A des Kolbens 3 befindet, wenn der Kolben 3 sich in seiner Minimalstellung zmin befindet. AA ist die Größe der wirksamen Arbeitsfläche 4A des Kolbens 3.

- VB ist in analoger Weise das Volumen an Hydraulikflüssigkeit 10, das sich im Hydraulikpfad 6B und im zweiten Arbeitsvolumen 5B befindet. Das Volumen VB ergibt sich zu

$$VB = V\min B + AB(z\max - z) \qquad (7)$$

wobei VminB diejenige Menge an Hydraulikflüssigkeit 10 ist, die sich zwischen dem Servoventil 7 und der Arbeitsfläche 4B des Kolbens 3 befindet, wenn der Kolben 3 sich in seiner Maximalstellung zmax befindet. AB ist die Größe der wirksamen Arbeitsfläche 4B des Kolbens 3.

- pN ist ein Nominaldruck.
- QNA ist ein Nennvolumenstrom, der bei maximaler Ventilstellung y in das erste Arbeitsvolumen 5A strömt, wenn eine Differenz zwischen dem Pumpendruck pP und dem im ersten Arbeitsvolumen 5A anstehenden ersten Arbeitsdruck pA gleich dem Nominaldruck pN ist.
- QNB ist ein Nennvolumenstrom, der bei maximaler Ventilstellung y in das zweite Arbeitsvolumen 5B strömt, wenn eine Differenz zwischen dem Pumpendruck pP und dem im zweiten Arbeitsvolumen 5B anstehenden zweiten Arbeitsdruck pB gleich dem Nominaldruck pN ist.

Der Leckagebeiwert ω geht in die Gleichungen 2 bis 5 linear ein. Es sind daher - an sich bekannte - lineare Parameterschätzalgorithmen anwendbar, mittels derer der Leckagebeiwert ω ermittelt werden kann.

Die Ermittlung des Leckagebeiwerts ω wird nachfolgend, ausgehend von den Gleichungen 2 und 3 erläutert. Sie wird also für den Fall erläutert, dass die Ventilstellung y größer als 0 ist. Es könnte jedoch in analoger Weise auch von den Gleichungen 4 und 5 ausgegangen werden.

Für die Anwendbarkeit der Parameterschätzalgorithmen ist es erforderlich, die Gleichungen 2 und 3 auf die Struktur

$$x = \theta H(t) \qquad (8)$$

zu bringen. In Gleichung 8 ist

- x ein messbarer Streckenausgangswert,
- θ ein Zeilenvektor der unbekannten Parameter und
- H(t) der sogenannte Regressorvektor des zeitvarianten Modells.

Konkret im vorliegenden Fall gilt θ = ω. Insbesondere ist θ somit ein Skalar. Weiterhin ergibt sich x als Vektor mit zwei Komponenten x1, x2, wobei für die Komponenten x1, x2 gilt:

$$x1 = \overset{\bullet}{pA} - \frac{E}{VA(z)} \cdot sign(pV - pA)\left( QNAy\sqrt{\frac{pV - pA}{pN}} - AA\overset{\bullet}{z} \right) \quad (9)$$

$$x2 = \overset{\bullet}{pB} - \frac{E}{VB(z)} \cdot sign(pB - pT)\left( QNBy\sqrt{\frac{pB - pT}{pN}} - AB\overset{\bullet}{z} \right) \quad (10)$$

In analoger Weise ergibt sich H (t) als Vektor mit zwei Komponenten H1, H2, wobei für die Komponenten H1, H2 gilt:

$$H1(t) = \frac{E}{VA(z)} \cdot sign(pV - pA) \cdot (pA - pB) \quad (11)$$

$$H2(t) = \frac{E}{VB(z)} \cdot sign(pB - pT) \cdot (pA - pB) \quad (12)$$

Im Ergebnis stehen somit zwei linear unabhängige Messwerte x1, x2 für das Parameterschätzproblem zur Verfügung. Die beiden Messwerte x1, x2 können genutzt werden, um die Schätzung des Parameters $\theta = \omega$ vorzunehmen.

Das Parameterschätzproblem wird als Zustandsbeobachtungsproblem formuliert, in dem als zu beobachtendes System gesetzt wird:

$$\overset{\bullet}{\vartheta} = 0 \quad (13)$$

$$x := \begin{bmatrix} x1 \\ x2 \end{bmatrix} = \begin{bmatrix} H1(t) \\ H2(t) \end{bmatrix} \cdot \theta =: H(t) \cdot \theta \quad (14)$$

Diese Annahme $\dot{\vartheta} = 0$ kann getroffen werden, weil der Leckagebeiwert $\omega$ sich - bezogen auf eine Sequenz von Messungen der obenstehend erläuterten Werte, nur langsam ändert und ferner die Beziehung $\theta = \omega$ gilt.

In Gleichung 14 ist ein Teil der einzusetzenden Größen konstant. Dies trifft beispielsweise zu auf den Nenndruck pN und die Federkonstante E der Hydraulikflüssigkeit 10. Ein weiterer Teil der Größen ist zeitlich variabel bzw. kann zeitlich variabel sein. Dies trifft insbesondere auf die Kolbenstellung z, den ersten und den zweiten Arbeitsdruck pA, pB und die Ventilstellung y zu. Die Größen z, pA, pB, y sind ohne weiteres messtechnisch erfassbar, beispielsweise mittels entsprechender Sensoren 16. Bezüglich der Ventilstellung y ist es sogar möglich, dass diese nicht messtechnisch erfasst werden muss, sondern von der Steuereinrichtung 11 zur Verfügung gestellt wird. Der Pumpendruck pP und der Tankdruck pT sind entweder zeitlich variabel oder zeitlich konstant. Im einen Fall können der Pumpendruck pP und der Tankdruck pT ohne weiteres mittels entsprechender Sensoren erfasst werden. Im anderen Fall müssen sie sowieso nur parametriert werden, wobei weiterhin im Rahmen der Parametrierung gegebenenfalls der Tankdruck pT auf den Wert 0 gesetzt werden kann. All diese Größen können daher ohne weiteres ermittelt und in Gleichung 14 eingesetzt werden.

Die Terme x1, x2 von Gleichung 14 enthalten jedoch auch die zeitliche Ableitung der Arbeitsdrücke pA, pB und der Kolbenstellung z. Die Ermittlung der zeitlichen Ableitung der Kolbenstellung z ist problemlos möglich. Die Werte für die Arbeitsdrücke pA, pB schwanken jedoch zu stark. Aus ihnen kann daher nicht direkt - mit sinnvollem Ergebnis - die zeitliche Ableitung ermittelt werden. Das Gleichungssystem gemäß Gleichung 14 kann dennoch gelöst werden. Dies wird nachstehend dargelegt.

Das Gleichungssystem gemäß Gleichung 14 wird einer Filterung unterzogen. Die Filterfunktion G der Filterung ist derart gewählt, dass sie einen Relativengrad von mindestens 1 aufweist. Wenn mit g1 und g2 Polynomfunktionen des (komplexen) Frequenzparameters s bezeichnet werden und weiterhin die Filterfunktion G sich zu

$$G = \frac{g1(s)}{g2(s)} \qquad (15)$$

ergibt, hat das Polynom g1(s) also mindestens eine Nullstelle weniger als das Polynom g2(s).

Die sich durch die Filterung ergebenden Größen werden von den ungefilterten Größen x, x1, x2, H, H1, H2 nachstehend dadurch unterschieden, dass zu den gefilterten Größen jeweils der Zusatz F hinzugefügt wird. Die gefilterten Größen werden nachfolgend also als xF, x1F, x2F, HF, H1F und H2F bezeichnet. Weiterhin wird mit L die Laplace-Transformation bezeichnet.

Für die gefilterten Größe x1F gilt somit:

$$L(x1F) := G(s) \cdot L\left( \dot{pA} - \frac{E}{VA(z)} \cdot sign(pP - pA) \cdot \left( QNAy\sqrt{\frac{pP - pA}{pN}} - AA\,\dot{z} \right) \right) \qquad (16)$$

Durch Ausnutzung der Linearität der Laplace-Transformation erhält man

$$L(x1F) = G(s) \cdot L\left( \dot{pA} \right) - G(s) \cdot L\left( \frac{E}{VA(z)} \cdot sign(pP - pA) \cdot \left( QNAy\sqrt{\frac{pP - pA}{pN}} - AA\,\dot{z} \right) \right)$$

$$(17)$$

Aufgrund des Umstands, dass die Filterfunktion G(s) einen Relativengrad von mindestens 1 hat, gilt weiterhin die Beziehung

$$G(s)L\left( \dot{pA} \right) = G(s) \cdot s \cdot L(pA) \qquad (18)$$

Durch Laplace-Rücktransformation erhält man somit

$$x1F = L^{-1}(G(s) \cdot s \cdot L(pA)) - \frac{E}{VA(z)} \cdot sign(pP - pA) \cdot \left( QNA \cdot y \cdot \sqrt{\frac{pP - pA}{pN}} - AA \cdot \dot{z} \right)$$

$$(19)$$

Im Ergebnis ist es daher möglich, die gefilterte Größe x1F zu ermitteln, ohne eine zeitliche Ableitung des ersten Arbeitsdrucks pA zu benötigen. Lediglich der erste Arbeitsdruck pA selbst wird benötigt.

Eine analoge Aussage gilt selbstverständlich für x2F. Auch hier wird für die Ermittlung der gefilterten Größe x2F nicht die zeitliche Ableitung des zweiten Arbeitsdrucks pB benötigt, sondern nur der zweite Arbeitsdruck pB selbst.

Selbstverständlich wird analog zur linken Seite von Gleichung 14 auch die rechte Seite von Gleichung 14 gefiltert. Man erhält somit das zu den Gleichungen 13 und 14 äquivalente Gleichungssystem

$$\dot{\theta} = 0 \qquad (20)$$

$$xF = HF(t) \cdot \theta \qquad (21)$$

In diesem Gleichungssystem sind insbesondere die Vektoren xF und HF bzw. deren Komponenten x1F, x2F, H1F, H2F zwar Größen, die nur mit erheblichem Rechenaufwand zu ermitteln sind, sie sind jedoch ermittelbar, und zwar mit guter Genauigkeit. Dies steht im Gegensatz zu dem ursprünglichen Gleichungssystem der Gleichungen 13 und 14, bei dem die Größen H1 und H2 sehr einfach ermittelbar sind, die Größen x1 und x2 hingegen nicht ermittelbar sind bzw. nicht mit hinreichender Genauigkeit ermittelbar sind.

Die Aufgabe besteht nunmehr somit darin, unter Verwendung der Sequenz von "Messungen" xF eine asymptotische Rekonstruktion des gesuchten Zustandes $\theta$ (wobei $\theta = \omega$ gilt) vorzunehmen.

Das durch die Gleichungen 20 und 21 definierte System ist ein linear zeitvariantes System (englisch: LTV = linear timevariant system). Daher reicht zur Rekonstruktion des Zustandes $\theta$ ein Lüneberg-Beobachter nicht aus. Zur Rekonstruktion des Zustands $\theta$ wird stattdessen ein Kalman-Filter verwendet.

Der Kalman-Filter ist ein zeitdiskretes System. Die Gleichungen 20 und 21 werden daher diskretisiert. Man erhält dadurch Gleichungen 22 und 23:

$$\vartheta_{k+1} = \vartheta_k \tag{22}$$

$$xF_k = \begin{pmatrix} H1F(TS \cdot k) \\ H2F(TS \cdot k) \end{pmatrix} \cdot \vartheta_k =: HF_k \cdot \vartheta_k \tag{23}$$

TS ist der Zeittakt bzw. die Zeitkonstante, mit der die "Messungen" x aufeinander folgen, k ist ein Index, der für den jeweiligen Abtastzeitpunkt steht.

Die Struktur und die Gleichungen des Kalman-Filters sind wie folgt:

$$K_k = P_{k-1} HF_k^T \left( HF_k P_{k-1} HF_k^T + R \right)^{-1} \tag{24}$$

$$\theta_k = \theta_{k-1} + K_k \left( x_k - HF_k \theta_{k-1} \right) = \theta_{k-1} + K_k e_k \tag{25}$$

$$P_k = \left( 1 - K_k HF_k \right)^2 P_{k-1} + K_k R K_k^T \tag{26}$$

In den Gleichungen 24 bis 26 kommen die bisher noch nicht definierten Größen K, P, HF$^T$ und R vor. Diese haben folgende Bedeutung:

- K ist die Kalman-Verstärkung. Die Kalman-Verstärkung ist vorliegend ein Vektor mit zwei Komponenten.
- P ist ein skalarer Kovarianzfaktor.
- HF$^T$ ist die Transponierte des gefilterten Regressorvektors HF.
- R ist die Varianz des Messrauschens. Die Varianz R ist auf die gefilterte "Messung" xF bezogen.
- e ist, wie sich aus Gleichung 25 ergibt, die Abweichung der k-ten gefilterten "Messung" xF$_k$ von der (k-1)-ten Schätzung HF$_{k-1}\theta$.

Wenn der Kovarianzfaktor P$_{k-1}$ den Wert 0 aufweist, wird aufgrund von Gleichung 24 die Kalman-Verstärkung K$_k$ ebenfalls zu 0. Dadurch wird in Gleichung 25 die k-te Schätzung des Parameter $\vartheta$, also der Wert $\theta_k$, nicht mehr geändert. Da mittels der erfindungsgemäßen Vorgehensweise jedoch eine langfristige Überwachung im Rahmen einer Fehlererkennung angestrebt wird, muss die Filterung adaptiv bleiben. Es muss somit gewährleistet werden, dass der Kovarianzfaktor P$_{k-1}$ stets einen Wert oberhalb von 0 aufweist. Andererseits soll der Kovarianzfaktor P$_{k-i}$ nicht beliebig große Werte annehmen können, damit eine numerische Stabilität gewährleistet bleibt. Dies wird dadurch erreicht, dass Gleichung 26 durch folgende Gleichung 27 ersetzt wird:

$$P_k = \lambda \left( 1 - K_k HF_k \right)^2 P_{k-1} + K_k R K_k^T \tag{27}$$

K$^T$ ist die Transponierte der Kalman-Verstärkung. $\lambda$ ist eine Lernrate. Für die Lernrate $\lambda$ gilt beispielsweise

$$\lambda = \lambda 0 \left(1 - \frac{\|P_{k-1}\|}{k0}\right) \tag{28}$$

$\lambda 0$ hat die Bedeutung einer maximalen Lernrate, k0 die Bedeutung einer maximalen Kovarianz.

Das aus den Gleichungen 24, 25, 27 und 28 bestehende System stellt eine voll funktionsfähige Lösung der vorliegenden Erfindung dar.

Um den Schätzalgorithmus robuster zu machen und insbesondere einer Parameterdrift entgegenzuwirken, kann weiterhin Gleichung 25 durch die Gleichung

$$\vartheta_k = \vartheta_{k-1} + K_k DZ(e_k) \tag{29}$$

ersetzt werden. DZ ist eine Totzone oder Unempfindlichkeitszone. Für die Totzone DZ gilt

$$DZ := \begin{cases} e_k - d \ f\ddot{u}r & e_k > d \\ 0 & f\ddot{u}r - d < e_k < d \\ e_k + d \ f\ddot{u}r & e_k < -d \end{cases} \tag{30}$$

d bestimmt die Größe der Totzone DZ. Vorzugsweise korrespondiert der Zahlenwert für d im wesentlichen mit dem typischen Rauschen der Abweichung e. Ein geeigneter Zahlenwert für d kann beispielsweise durch Beobachtung des Systems ermittelt werden oder durch Versuche herausgefunden werden.

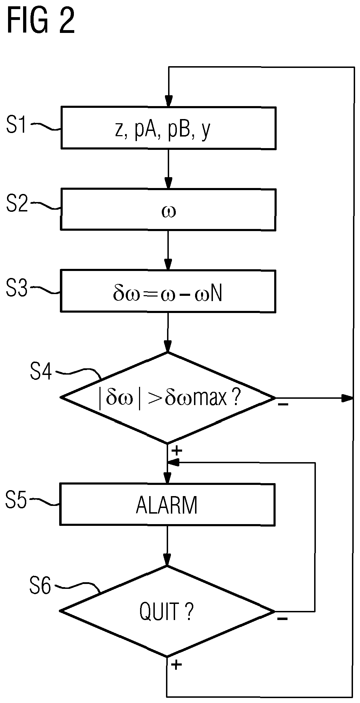

Durch die obenstehend erläuterte Vorgehensweise ist es somit möglich, dass die Auswertungseinrichtung 12 entsprechend der Darstellung in FIG 2 - gegebenenfalls nach einer entsprechenden Parametrierung - in einem Schritt S1 jeweils die Kolbenstellung z des Kolbens 3, die Arbeitsdrücke pA, pB der Arbeitsvolumina 5A, 5B und die Ventilstellung y des Servoventils 7 entgegennimmt. Soweit erforderlich, nimmt die Auswertungseinrichtung 12 im Schritt S1 zusätzlich weitere Werte entgegen wie beispielsweise den Pumpendruck pP und den Tankdruck pT. In einem Schritt S2 ermittelt die Auswertungseinrichtung 12 sodann, aufbauend auf den im Schritt S1 entgegengenommenen Werten, den Leckagebeiwert $\omega$. Der Schritt S2 wurde obenstehend ausführlich erläutert. In einem Schritt S3 ermittelt die Auswertungseinrichtung 12 die Differenz $\delta\omega$ des ermittelten Leckagebeiwerts $\omega$ und eines vorbestimmten nominalen Leckagebeiwertes $\omega$N. In einem Schritt S4 vergleicht die Auswertungseinrichtung 12 die ermittelte Differenz $\delta\omega$ - genauer: deren Betrag bzw. Absolutwert - mit einem Schrankenwert $\delta\omega$max. Sobald der Betrag bzw. der Absolutwert der Differenz $\delta\omega$ den Schrankenwert $\delta\omega$max überschreitet, geht die Auswertungseinrichtung 12 zu einem Schritt S5 über. Im Schritt S5 löst die Auswertungseinrichtung 12 einen Alarm aus. Anderenfalls führt sie den Schritt S5 nicht aus. Der Alarm kann insbesondere als optischer Alarm ausgebildet sein, der über ein Sichtgerät an eine Bedienperson ausgegeben wird. Die Bedienperson kann daraufhin beispielsweise eine Wartung der Hydraulikzylindereinheit 1 einleiten.

Die Auswertungseinrichtung 12 führt die Schritte S1 bis S4 und damit insbesondere die Ermittlung des Leckagebeiwerts $\omega$ und der Differenz $\delta\omega$ sowie den Vergleich mit dem Schrankenwert $\delta\omega$max während des Betriebs der Hydraulikzylindereinheit 1 aus. Weiterhin führt die Auswertungseinrichtung 12 die Schritte S1 bis S4 kontinuierlich aus. Wenn die Auswertungseinrichtung 12 vom Schritt S4 zum Schritt S5 übergeht, bleibt die Alarmmeldung jedoch erhalten, bis sie in einem Schritt S6 beispielsweise von der Bedienperson quittiert wird.

Zusammengefasst betrifft die vorliegende Erfindung somit folgenden Sachverhalt:

Eine Hydraulikzylindereinheit 1 weist einen Hydraulikzylinder 2, einen in dem Hydraulikzylinder 2 verfahrbaren Kolben 3 und ein Servoventil 7 auf. Der Kolben 3 trennt ein erstes und ein zweites Arbeitsvolumen 5A, 5B der Hydraulikzylindereinheit 1 voneinander. Das Servoventil 7 ist mit einer Hydraulikpumpe 8, einem Tank 9 sowie dem ersten und dem zweiten Arbeitsvolumen 5A, 5B verbunden. Das Servoventil 7 wird über die Hydraulikpumpe 8 mit einem Pumpendruck pP beaufschlagt. Der Tank 9 weist einen Tankdruck pT auf. Das Servoventil 7 wird auf eine definierte Ventilstellung y eingestellt. Eine Kolbenstellung z des Kolbens 3 im Hydraulikzylinder 2 sowie ein erster und ein zweiter Arbeitsdruck pA, pB, mit dem das erste und das zweite Arbeitsvolumen 5A, 5B beaufschlagt sind, werden erfasst. Eine Auswertungseinrichtung 12 ermittelt anhand der Kolbenstellung z, des ersten und des zweiten Arbeitsdrucks pA, pB, der Ventilstellung y, des Pumpendrucks pP und des Tankdrucks pT in Verbindung mit zeitlich unveränderlichen Parametern der Hydraulikzylindereinheit 1 einen Leckagebeiwert $\omega$ der Hydraulikzylindereinheit 1.

Die vorliegende Erfindung weist viele Vorteile auf. Insbesondere wird durch die erfindungsgemäße Vorgehensweise ermöglicht, den Leckagebeiwert $\omega$ basierend auf Messwerten, die beim laufenden Betrieb der Hydraulikzylindereinheit 1 sowieso anfallen, robust zu schätzen. Eine Abweichung des ermittelten Leckagebeiwerts ω von einem nominalen oder erwarteten Leckagebeiwert kann dann dazu genutzt werden, einen Alarm auszulösen oder das Bedienpersonal auf einen anstehenden Wechsel der Dichtung hinzuweisen. Weiterhin wird die Zuverlässigkeit und Verfügbarkeit der Hydraulikzylindereinheit 1 erhöht, da ein aufwändiger Tausch der internen Ringdichtung in ein reguläres Wartungsintervall eingeplant werden kann, ohne ein vorheriges Versagen der Dichtung befürchten zu müssen und ohne die Dichtung frühzeitig vor Ablauf ihrer Lebensdauer ersetzen zu müssen. Die erfindungsgemäße Lösung ist kosteneffizient und ohne nennenswerte Änderung der Hardware realisierbar. Aufwändige Spezialhardware (insbesondere Durchflussmesser) werden nicht benötigt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

| | |
|---|---|
| 1 | Hydraulikzylindereinheit |
| 2 | Hydraulikzylinder |
| 3 | Kolben |
| 4A, 4B | Arbeitsflächen |
| 5A, 5B | Arbeitsvolumina |
| 6A, 6B | Hydraulikpfade |
| 7 | Servoventil |
| 8 | Hydraulikpumpe |
| 9 | Hydraulikreservoir/Tank |
| 10 | Hydraulikflüssigkeit |
| 11 | Steuereinrichtung |
| 12 | Auswertungseinrichtung |
| 13 | Computerprogramm |
| 14 | Datenträger |
| 15 | Maschinencode |
| 16 | Sensoren |
| 17 | weiterer Sensor |

| | |
|---|---|
| AA, AB | Größe der wirksamen Arbeitsflächen |
| DZ | Totzone |
| E | Federkonstante der Hydraulikflüssigkeit |
| e | Abweichung |
| G | Filterfunktion |
| g1, g2 | Polynome |
| H, HF | Regressorvektoren |
| H1, H2, H1F, H2F | Komponenten der Regressorvektoren |
| I | Leckstrom |
| L | Laplace-Transformation |
| K | Kalman-Verstärkung |
| k | Index |
| k0 | maximale Kovarianz |
| P | Kovarianzfaktor |
| pA, pB | Arbeitsdrücke |
| pN | Nenndruck |
| pP | Pumpendruck |
| pT | Tankdruck |
| QNA, QNB | Nennvolumenströme |
| R | Varianz des Messrauschens |
| s | Frequenzparameter |
| S1 bis S6 | Schritte |
| TS | Zeitkonstante |
| VA, VB | Volumina |

| VminA, VminB | Minimalvolumina |
| x, xF | Streckenausgangswerte |
| x1, x2, x1F, x2F | Komponenten der Streckenausgangswerte |
| y | Ventilstellung |
| z | Kolbenstellung |
| zmax | Maximalstellung des Kolbens |
| zmin | Minimalstellung des Kolbens |

| $\delta\omega$ | Differenz |
| $\delta\omega$max | Schrankenwert |
| $\lambda$ | Lernrate |
| $\lambda$0 | maximale Lernrate |
| $\theta$ | unbekannter Parameter |
| $\omega$ | Leckagebeiwert |
| $\omega$N | nominaler Leckagebeiwert |

**Patentansprüche**

1. Ermittlungsverfahren für einen Leckagebeiwert ($\omega$) einer Hydraulikzylindereinheit (1), die einen Hydraulikzylinder (2), einen in dem Hydraulikzylinder (2) verfahrbaren Kolben (3) und ein Servoventil (7) aufweist, wobei der Kolben (3) ein erstes und ein zweites Arbeitsvolumen (5A, 5B) der Hydraulikzylindereinheit (1) voneinander trennt, wobei das Servoventil (7) mit einer Hydraulikpumpe (8), einem Tank (9) sowie dem ersten und dem zweiten Arbeitsvolumen (5A, 5B) verbunden ist,

   - wobei das Servoventil (7) über die Hydraulikpumpe (8) mit einem Pumpendruck (pP) beaufschlagt wird und der Tank (9) einen Tankdruck (pT) aufweist,
   - wobei das Servoventil (7) auf eine definierte Ventilstellung (y) eingestellt wird,
   - wobei eine Kolbenstellung (z) des Kolbens (3) im Hydraulikzylinder (2) sowie ein erster und ein zweiter Arbeitsdruck (pA, pB), mit dem das erste und das zweite Arbeitsvolumen (5A, 5B) beaufschlagt sind, erfasst werden,
   - wobei eine Auswertungseinrichtung (12) die Kolbenstellung (z), den ersten und den zweiten Arbeitsdruck (pA, pB) und die Ventilstellung (y) entgegennimmt,
   - wobei die Auswertungseinrichtung (12) den Leckagebeiwert ($\omega$) anhand der Kolbenstellung (z), des ersten und des zweiten Arbeitsdrucks (pA, pB), der Ventilstellung (y), des Pumpendrucks (pP) und eines Tankdrucks (pT) in Verbindung mit zeitlich unveränderlichen Parametern der Hydraulikzylindereinheit (1) ermittelt.

2. Ermittlungsverfahren nach Anspruch 1,
   **dadurch gekennzeichnet,**
   **dass** die Auswertungseinrichtung (12) den Leckagebeiwert ($\omega$) rekursiv anhand einer Sequenz ermittelt, wobei die Sequenz Gruppen von zeitlich zusammengehörigen Werten der Kolbenstellung (z), des ersten und des zweiten Arbeitsdrucks (pA, pB), der Ventilstellung (y), des Pumpendrucks (pP) und des Tankdrucks (pT) umfasst.

3. Verfahren nach Anspruch 1 oder 2,
   **dadurch gekennzeichnet,**
   **dass** die Auswertungseinrichtung (12) während des Betriebs der Hydraulikzylindereinheit (1) kontinuierlich eine Differenz ($\delta\omega$) zwischen einem nominalen Leckagebeiwert ($\omega$N) und dem ermittelten Leckagebeiwert ($\omega$) ermittelt und einen Alarm auslöst, sobald der Absolutwert der Differenz ($\delta\omega$) einen Schrankenwert ($\delta\omega$max) überschreitet.

4. Computerprogramm für eine Auswertungseinrichtung (12), wobei das Computerprogramm Maschinencode (15) umfasst, der von der Auswertungseinrichtung (12) unmittelbar abarbeitbar ist, wobei die Abarbeitung des Maschinencodes (15) durch die Auswertungseinrichtung (12) bewirkt, dass die Auswertungseinrichtung (12)

   - eine Kolbenstellung (z) eines in einem Hydraulikzylinder (2) einer Hydraulikzylindereinheit (1) verfahrbaren, ein mit einem Servoventil (7) der Hydraulikzylindereinheit (1) verbundenes erstes und ein mit dem Servoventil (7) verbundenes zweites Arbeitsvolumen (5A, 5B) der Hydraulikzylindereinheit (1) voneinander trennenden Kolbens (3) der Hydraulikzylindereinheit (1), einen ersten und einen zweiten Arbeitsdruck (pA, pB), mit dem das erste und das zweite Arbeitsvolumen (5A, 5B) beaufschlagt sind, und eine Ventilstellung (y) des Servoventils (7) entgegennimmt und

- anhand der Kolbenstellung (z), des ersten und des zweiten Arbeitsdrucks (pA, pB), der Ventilstellung (y), eines Pumpendrucks (pP) einer mit dem Servoventil (7) verbundenen Hydraulikpumpe (8) und eines Tankdrucks (pT) eines mit dem Servoventil (7) verbundenen Tanks (9) in Verbindung mit zeitlich unveränderlichen Parametern der Hydraulikzylindereinheit (1) einen Leckagebeiwert ($\omega$) der Hydraulikzylindereinheit (1) ermittelt.

5. Computerprogramm nach Anspruch 4,
   **dadurch gekennzeichnet,**
   **dass** die Abarbeitung des Maschinencodes (15) durch die Auswertungseinrichtung (12) bewirkt, dass die Auswertungseinrichtung (12) den Leckagebeiwert ($\omega$) rekursiv anhand einer Sequenz ermittelt, wobei die Sequenz Gruppen von zeitlich zusammengehörigen Werten der Kolbenstellung (z), des ersten und des zweiten Arbeitsdrucks (pA, pB), der Ventilstellung (y), des Pumpendrucks (pP) und des Tankdrucks (pT) umfasst.

6. Computerprogramm nach Anspruch 4 oder 5,
   **dadurch gekennzeichnet,**
   **dass** die Abarbeitung des Maschinencodes (15) durch die Auswertungseinrichtung (12) bewirkt, dass die Auswertungseinrichtung (12) während des Betriebs der Hydraulikzylindereinheit (1) kontinuierlich eine Differenz ($\delta\omega$) zwischen einem nominalen Leckagebeiwert ($\omega N$) und dem ermittelten Leckagebeiwert ($\omega$) ermittelt und einen Alarm auslöst, sobald der Absolutwert der Differenz ($\delta\omega$) einen Schrankenwert ($\delta\omega max$) überschreitet.

7. Auswertungseinrichtung,
   **dadurch gekennzeichnet,**
   **dass** die Auswertungseinrichtung (12) mit einem Computerprogramm (13) nach Anspruch 4, 5 oder 6 programmiert ist.

8. Hydraulikzylindereinheit, die einen Hydraulikzylinder (2), einen in dem Hydraulikzylinder (2) verfahrbaren Kolben (3) und ein Servoventil (7) aufweist, wobei der Kolben (3) ein erstes und ein zweites Arbeitsvolumen (5A, 5B) der Hydraulikzylindereinheit voneinander trennt, wobei das Servoventil (7) mit einer Hydraulikpumpe (8), einem Tank (9) sowie dem ersten und dem zweiten Arbeitsvolumen (5A, 5B) verbunden ist,

   - wobei das Servoventil (7) über die Hydraulikpumpe (8) mit einem Pumpendruck (pP) beaufschlagt wird und der Tank (9) einen Tankdruck (pT) aufweist,
   - wobei das Servoventil (7) auf eine definierte Ventilstellung (y) einstellbar ist,
   - wobei von entsprechenden Sensoren (16) eine Kolbenstellung (z) des Kolbens (3) im Hydraulikzylinder (2) sowie ein erster und ein zweiter Arbeitsdruck (pA, pB), mit dem das erste und das zweite Arbeitsvolumen (5A, 5B) beaufschlagt sind, erfassbar sind,
   - wobei eine Auswertungseinrichtung (12) dazu ausgebildet ist, von den Sensoren (16) die Kolbenstellung (z), den ersten und den zweiten Arbeitsdruck (pA, pB) und von der Steuereinrichtung (11) oder von einem weiteren Sensor (17) die Ventilstellung (y) entgegenzunehmen,
   - wobei die Auswertungseinrichtung (12) weiterhin dazu ausgebildet ist, anhand der Kolbenstellung (z), des ersten und des zweiten Arbeitsdrucks (pA, pB), der Ventilstellung (y), des Pumpendrucks (pP) und eines Tankdrucks (pT) in Verbindung mit zeitlich unveränderlichen Parametern der Hydraulikzylindereinheit (1) einen Leckagebeiwert ($\omega$) der Hydraulikzylindereinheit (1) zu ermitteln.

9. Hydraulikzylindereinheit nach Anspruch 8,
   **dadurch gekennzeichnet,**
   **dass** die Auswertungseinrichtung (12) derart ausgebildet ist, dass sie den Leckagebeiwert ($\omega$) rekursiv anhand einer Sequenz ermittelt, wobei die Sequenz Gruppen von zeitlich zusammengehörigen Werten der Kolbenstellung (z), des ersten und des zweiten Arbeitsdrucks (pA, pB), der Ventilstellung (y), des Pumpendrucks (pP) und des Tankdrucks (pT) umfasst.

10. Hydraulikzylindereinheit nach Anspruch 8 oder 9,
    **dadurch gekennzeichnet,**
    **dass** die Auswertungseinrichtung (12) derart ausgebildet ist, dass sie während des Betriebs der Hydraulikzylindereinheit kontinuierlich eine Differenz ($\delta\omega$) zwischen einem nominalen Leckagebeiwert ($\omega N$) und dem ermittelten Leckagebeiwert ($\omega$) ermittelt und einen Alarm auslöst, sobald der Absolutwert der Differenz ($\delta\omega$) einen Schrankenwert ($\delta\omega max$) überschreitet.

**Claims**

1. Method for establishing a leakage coefficient (ω) of a hydraulic cylinder unit (1) having a hydraulic cylinder (2), a piston (3) that is displaceable in the hydraulic cylinder (2) and a servo valve (7), wherein the piston (3) separates a first and a second working volume (5A, 5B) of the hydraulic cylinder unit (1) from one another, wherein the servo valve (7) is connected to a hydraulic pump (8), a tank (9) and the first and the second working volume (5A, 5B),

   - wherein a pump pressure (pP) is applied to the servo valve (7) via the hydraulic pump (8) and the tank (9) has a tank pressure (pT),
   - wherein the servo valve (7) is set to a defined valve position (y),
   - wherein a piston position (z) of the piston (3) in the hydraulic cylinder (2) and a first and a second working pressure (pA, pB), which are applied to the first and the second working volume (5A, 5B), are captured,
   - wherein an evaluation device (12) receives the piston position (z), the first and the second working pressure (pA, pB) and the valve position (y),
   - wherein the evaluation device (12) establishes the leakage coefficient (ω) on the basis of the piston position (z), the first and the second working pressure (pA, pB), the valve position (y), the pump pressure (pP) and a tank pressure (pT) in conjunction with time-invariant parameters of the hydraulic cylinder unit (1).

2. Establishing method according to Claim 1,
   **characterized**
   **in that** the evaluation device (12) establishes the leakage coefficient (ω) recursively on the basis of a sequence, wherein the sequence comprises groups of values, associated in time, of the piston position (z), the first and the second working pressure (pA, pB), the valve position (y), the pump pressure (pP) and the tank pressure (pT).

3. Method according to Claim 1 or 2,
   **characterized**
   **in that** the evaluation device (12) continuously establishes a difference (δω) between a nominal leakage coefficient (ωN) and the established leakage coefficient (ω) during the operation of the hydraulic cylinder unit (1) and said evaluation device triggers an alarm as soon as the absolute value of the difference (δω) exceeds a limiting value (δωmax).

4. Computer program for an evaluation device (12), wherein the computer program comprises machine code (15) that is immediately executable by the evaluation device (12), wherein the executing the machine code (15) by the evaluation device (12) causes the evaluation device (12)

   - to receive a piston position (z) of a piston (3) of the hydraulic cylinder unit (1) that is displaceable in a hydraulic cylinder (2) of a hydraulic cylinder unit (1) and that separates a first working volume (5A) of the hydraulic cylinder unit (1) that is connected to a servo valve (7) of the hydraulic cylinder unit (1) and a second working volume (5B) of said hydraulic cylinder unit that is connected to the servo valve (7) from one another, a first and a second working pressure (pA, pB), applied to the first and the second working volume (5A, 5B), and a valve position (y) of the servo valve (7) and
   - to establish a leakage coefficient (ω) of the hydraulic cylinder unit (1) on the basis of the piston position (z), the first and the second working pressure (pA, pB), the valve position (y), a pump pressure (pP) of a hydraulic pump (8) connected to the servo valve (7) and a tank pressure (pT) of a tank (9) connected to the servo valve (7) in conjunction with time-invariant parameters of the hydraulic cylinder unit (1).

5. Computer program according to Claim 4,
   **characterized**
   **in that** the execution of the machine code (15) by the evaluation device (12) causes the evaluation device (12) to establish the leakage coefficient (ω) recursively on the basis of a sequence, wherein the sequence comprises groups of values, associated in time, of the piston position (z), the first and the second working pressure (pA, pB), the valve position (y), the pump pressure (pP) and the tank pressure (pT).

6. Computer program according to Claim 4 or 5,
   **characterized**
   **in that** the execution of the machine code (15) by the evaluation device (12) causes the evaluation device (12) to continuously establish a difference (δω) between a nominal leakage coefficient (ωN) and the established leakage coefficient (ω) during the operation of the hydraulic cylinder unit (1) and said evaluation device to trigger an alarm as soon as the absolute value of the difference ($\delta\omega$) exceeds a limiting value ($\delta\omega$max).

7. Evaluation device,
   **characterized**
   **in that** the evaluation device (12) is programmed with a computer program (13) according to Claim 4, 5 or 6.

8. Hydraulic cylinder unit having a hydraulic cylinder (2), a piston (3) that is displaceable in the hydraulic cylinder (2) and a servo valve (7), wherein the piston (3) separates a first and a second working volume (5A, 5B) of the hydraulic cylinder unit from one another, wherein the servo valve (7) is connected to a hydraulic pump (8), a tank (9) and the first and the second working volume (5A, 5B),

   - wherein a pump pressure (pP) is applied to the servo valve (7) via the hydraulic pump (8) and the tank (9) has a tank pressure (pT),
   - wherein the servo valve (7) can be set to a defined valve position (y),
   - wherein a piston position (z) of the piston (3) in the hydraulic cylinder (2) and a first and a second working pressure (pA, pB), which are applied to the first and the second working volume (5A, 5B), can be captured by appropriate sensors (16),
   - wherein an evaluation device (12) is embodied to receive the piston position (z) and the first and the second working pressure (pA, pB) from the sensors (16) and to receive the valve position (y) from the control device (11) or from a further sensor (17),
   - wherein the evaluation device (12) is furthermore embodied to establish a leakage coefficient ($\omega$) of the hydraulic cylinder unit (1) on the basis of the piston position (z), the first and the second working pressure (pA, pB), the valve position (y), the pump pressure (pP) and a tank pressure (pT) in conjunction with time-invariant parameters of the hydraulic cylinder unit (1).

9. Hydraulic cylinder unit according to Claim 8,
   **characterized**
   **in that** the evaluation device (12) is embodied in such a way that it establishes the leakage coefficient ($\omega$) recursively on the basis of a sequence, wherein the sequence comprises groups of values, associated in time, of the piston position (z), the first and the second working pressure (pA, pB), the valve position (y), the pump pressure (pP) and the tank pressure (pT).

10. Hydraulic cylinder unit according to Claim 8 or 9,
    **characterized**
    **in that** the evaluation device (12) is embodied in such a way that it continuously establishes a difference ($\delta\omega$) between a nominal leakage coefficient ($\omega$N) and the established leakage coefficient ($\omega$) during the operation of the hydraulic cylinder unit and said evaluation device triggers an alarm as soon as the absolute value of the difference ($\delta\omega$) exceeds a limiting value ($\delta\omega$max) .

**Revendications**

1. Procédé de détection pour un coefficient de fuite ($\omega$) d'un ensemble vérin hydraulique (1) qui comprend un vérin hydraulique (2), un piston (3) pouvant être déplacé dans le vérin hydraulique (2) et une servovalve (7), le piston (3) séparant un premier et un second volume de travail (5A, 5B) de l'ensemble vérin hydraulique (1) l'un de l'autre, la servovalve (7) étant reliée à une pompe hydraulique (8), à un réservoir (9) ainsi qu'au premier et au second volume de travail (5A, 5B),

   - dans lequel la servovalve (7) est alimentée avec une pression de pompe (pP) par la pompe hydraulique (8) et le réservoir (9) présente une pression de réservoir (pT),
   - dans lequel la servovalve (7) est réglée à une position de valve (y) déterminée,
   - dans lequel une position de piston (z) du piston (3) dans le vérin hydraulique (2) ainsi qu'une première et une seconde pression de travail (pA, pB), qui sont appliquées au premier et au second volume de travail (5A, 5B), sont détectées,
   - dans lequel un dispositif d'évaluation (12) reçoit la position de piston (z), la première et la seconde pression de travail (pA, pB) et la position de valve (y),
   - dans lequel le dispositif d'évaluation (12) détermine le coefficient de fuite ($\omega$) sur la base de la position de piston (z), de la première et de la seconde pression de travail (pA, pB), de la position de valve (y), de la pression de pompe (pP) et d'une pression de réservoir (pT), en relation avec des paramètres non variables dans le temps de l'ensemble vérin hydraulique (1).

2. Procédé de détection selon la revendication 1, **caractérisé en ce que** le dispositif d'évaluation (12) effectue une détermination récursive du coefficient de fuite (ω) sur la base d'une séquence, la séquence comprenant des groupes de valeurs, connexes dans le temps, de la position de piston (z), de la première et de la seconde pression de travail (pA, pB), de la position de valve (y), de la pression de pompe (pP) et de la pression de réservoir (pT).

3. Procédé selon la revendication 1 ou 2, **caractérisé en ce que** le dispositif d'évaluation (12) détermine en continu, pendant le fonctionnement de l'ensemble vérin hydraulique (1), une différence (δω) entre un coefficient de fuite nominal (ωN) et le coefficient de fuite (ω) déterminé et déclenche une alarme dès que la valeur absolue de la différence (δω) dépasse une valeur limite (δωmax).

4. Programme d'ordinateur pour un dispositif d'évaluation (12), le programme d'ordinateur comprenant un code machine (15) qui peut être directement exécuté par le dispositif d'évaluation (12), l'exécution du code machine (15) par le dispositif d'évaluation (12) ayant pour effet que le dispositif d'évaluation (12)

- reçoit une position de piston (z) d'un piston (3) d'un ensemble vérin hydraulique (1) pouvant être déplacé dans un vérin hydraulique (2) de l'ensemble vérin hydraulique (1) et séparant l'un de l'autre un premier volume de travail (5A) de l'ensemble vérin hydraulique (1) relié à une servovalve (7) de l'ensemble vérin hydraulique (1) et un second volume de travail (5B) de l'ensemble vérin hydraulique (1) relié à la servovalve (7), une première et une seconde pression de travail (pA, pB), qui sont appliquées au premier et au second volume de travail (5A, 5B), et une position de valve (y) de la servovalve (7), et
- détermine un coefficient de fuite (ω) de l'ensemble vérin hydraulique (1) sur la base de la position de piston (z), de la première et de la seconde pression de travail (pA, pB), de la position de valve (y), d'une pression de pompe (pP) d'une pompe hydraulique (8) reliée à la servovalve (7) et d'une pression de réservoir (pT) d'un réservoir (9) relié à la servovalve (7), en relation avec des paramètres non variables dans le temps de l'ensemble vérin hydraulique (1).

5. Programme d'ordinateur selon la revendication 4, **caractérisé en ce que** l'exécution du code machine (15) par le dispositif d'évaluation (12) a pour effet que le dispositif d'évaluation (12) effectue une détermination récursive du coefficient de fuite (ω) sur la base d'une séquence, la séquence comprenant des groupes de valeurs, connexes dans le temps, de la position de piston (z), de la première et de la seconde pression de travail (pA, pB), de la position de valve (y), de la pression de pompe (pP) et de la pression de réservoir (pT).

6. Programme d'ordinateur selon la revendication 4 ou 5, **caractérisé en ce que** l'exécution du code machine (15) par le dispositif d'évaluation (12) a pour effet que le dispositif d'évaluation (12) détermine en continu, pendant le fonctionnement de l'ensemble vérin hydraulique (1), une différence (δω) entre un coefficient de fuite nominal (ωN) et le coefficient de fuite (ω) déterminé et déclenche une alarme dès que la valeur absolue de la différence (δω) dépasse une valeur limite (δωmax).

7. Dispositif d'évaluation, **caractérisé en ce que** le dispositif d'évaluation (12) est programmé avec un programme d'ordinateur (13) selon la revendication 4, 5 ou 6.

8. Ensemble vérin hydraulique qui comprend un vérin hydraulique (2), un piston (3) pouvant être déplacé dans le vérin hydraulique (2) et une servovalve (7), le piston (3) séparant un premier et un second volume de travail (5A, 5B) de l'ensemble vérin hydraulique l'un de l'autre, la servovalve (7) étant reliée à une pompe hydraulique (8), à un réservoir (9) ainsi qu'au premier et au second volume de travail (5A, 5B),

- dans lequel la servovalve (7) est alimentée avec une pression de pompe (pP) par la pompe hydraulique (8) et le réservoir (9) présente une pression de réservoir (pT),
- dans lequel la servovalve (7) peut être réglée à une position de valve (y) déterminée,
- dans lequel une position de piston (z) du piston (3) dans le vérin hydraulique (2) ainsi qu'une première et une seconde pression de travail (pA, pB), qui sont appliquées au premier et au second volume de travail (5A, 5B), peuvent être détectées par des capteurs (16) correspondants,
- dans lequel un dispositif d'évaluation (12) est conçu pour recevoir, des capteurs (16), la position de piston (z) ainsi que la première et la seconde pression de travail (pA, pB), et recevoir, du dispositif de commande (11) ou d'un autre capteur (17), la position de valve (y),
- dans lequel le dispositif d'évaluation (12) est en outre conçu pour déterminer un coefficient de fuite ($\omega$) de l'ensemble vérin hydraulique (1) sur la base de la position de piston (z), de la première et de la seconde pression de travail (pA, pB), de la position de valve (y), de la pression de pompe (pP) et d'une pression de réservoir (pT), en relation avec des paramètres non variables dans le temps de l'ensemble vérin hydraulique (1).

9. Ensemble vérin hydraulique selon la revendication 8, **caractérisé en ce que** le dispositif d'évaluation (12) est conçu de sorte qu'il effectue une détermination récursive du coefficient de fuite ($\omega$) sur la base d'une séquence, la séquence comprenant des groupes de valeurs, connexes dans le temps, de la position de piston (z), de la première et de la seconde pression de travail (pA, pB), de la position de valve (y), de la pression de pompe (pP) et de la pression de réservoir (pT).

10. Ensemble vérin hydraulique selon la revendication 8 ou 9, **caractérisé en ce que** le dispositif d'évaluation (12) est conçu de sorte qu'il détermine en continu, pendant le fonctionnement de l'ensemble vérin hydraulique, une différence ($\delta\omega$) entre un coefficient de fuite nominal ($\omega N$) et le coefficient de fuite ($\omega$) déterminé et déclenche une alarme dès que la valeur absolue de la différence ($\delta\omega$) dépasse une valeur limite ($\delta\omega max$).

FIG 1

# FIG 2

Flowchart:

- S1: z, pA, pB, y
- S2: ω
- S3: $\delta\omega = \omega - \omega N$
- S4: $|\delta\omega| > \delta\omega max$ ?  (−)
- (+)
- S5: ALARM
- S6: QUIT ?  (−)
- (+)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007051857 B3
- DE 19927117 A1